Europäisches Patentamt

European Patent Office

Office européen des brevets

(19)

(11) Numéro de publication : **0 086 137**
**B1**

(12) **FASCICULE DE BREVET EUROPÉEN**

(45) Date de publication du fascicule du brevet :
06.05.87

(51) Int. Cl.⁴ : **G 06 F 12/06**

(21) Numéro de dépôt : **83400172.9**

(22) Date de dépôt : **26.01.83**

(54) Dispositif d'adressage des cartes d'un automate programmable pour la sécurité des échanges sur le bus.

(30) Priorité : **01.02.82 FR 8201683**

(43) Date de publication de la demande :
**17.08.83 Bulletin 83/33**

(45) Mention de la délivrance du brevet :
**06.05.87 Bulletin 87/19**

(84) Etats contractants désignés :
**BE CH DE GB IT LI NL SE**

(56) Documents cités :
**FR-A- 2 245 028**
**FR-A- 2 271 613**
**US-A- 3 872 452**
**US-A- 3 898 631**
**US-A- 4 007 452**
**EDN MAGAZINE, vol. 26, no. 3, 4 février 1981, page 88, Boston (US); N. D. MACKINTOSH: "Interrogation tells uP which boards are present"**

(73) Titulaire : **MERLIN GERIN**
**Rue Henri Tarze**
**F-38050 Grenoble Cédex (FR)**

(72) Inventeur : **Billet, Alain**
**Merlin Gerin**
**F-38050 Grenoble Cedex (FR)**
Inventeur : **Leemans, Jean**
**Merlin Gerin**
**F-38050 Grenoble Cedex (FR)**
Inventeur : **Leroy, Jean**
**Merlin Gerin**
**F-38050 Grenoble Cedex (FR)**

(74) Mandataire : **Kern, Paul et al**
**Merlin Gerin Sce. Brevets 20, rue Henri Tarze**
**F-38050 Grenoble Cedex (FR)**

EP 0 086 137 B1

Jouve, 18, rue St-Denis, 75001 Paris, France

## Description

L'invention est relative à un dispositif de sécurité des échanges sur un bus d'un automate programmable faisant l'objet du préambule de la revendication 1.

L'adressage des cartes d'un automate programmable s'opère généralement par l'intermédiaire d'un pion ou clé débrochable, situé sur la face avant de chaque carte. Ce pion amovible sert à l'affectation du numéro du module. Un système de compte-rendus vérifie qu'une carte au moins répond, mais il est impossible de savoir si c'est la bonne et la seule à répondre.

Selon le brevet US-A-3 872 452, chaque carte d'un système d'adressage du type flottant comporte un identificateur d'adresse formé par un câblage solidaire du bus, et un comparateur d'adresse destiné à comparer l'adresse effective de la carte avec l'adresse mise sur le bus par un registre d'adresse de l'unité de commande. Le câblage est constitué par une pluralité de brins élémentaires portés à des niveaux logiques bas (0) ou haut (1) selon une combinaison prédéterminée, de manière à constituer une adresse câblée de n bits qui varie d'un emplacement à un autre. L'adressage d'une carte dépend à la fois de l'emplacement de la carte sur le bus, et du volume d'adressage des cartes précédentes. Chaque carte comporte de plus un codeur d'adresse et un additionneur binaire qui fait l'addition de l'adresse codée par le codeur et de l'adresse câblée par l'identificateur. L'adresse effective de la carte est illustrée par le signal de sortie de l'additionneur qui est pris en compte par le comparateur, et comparé avec l'adresse mise sur le bus par l'unité de commande. Les brins d'adresse flottante affectés à une carte intermédiaire doivent obligatoirement transiter par les cartes précédentes. La présence de la totalité des cartes est, de ce fait, indispensable pour assurer un fonctionnement correct du système.

Le brevet français FR-A-2 271 613 se rapporte à un procédé de contrôle de fonctionnement d'installations de traitement de données, notamment d'installations de communications téléphoniques contenant des dispositifs périphériques raccordés à une unité centrale de commande par un média. Chaque dispositif périphérique renvoie à l'unité de commande un compte-rendu de son adresse et de son adresse complémentée. Ce système de compte-rendus opère en plusieurs phases de fonctionnement provoquant un décalage dans le temps du transfert des deux compte-rendus (de l'adresse et de son complément) sur le bus de retour. Un tel dispositif présente l'inconvénient d'augmenter le temps de contrôle des cartes et n'élimine pas le risque d'erreur de diagnostic dans le cas où une panne surviendrait pendant le cycle de contrôle.

L'objet de l'invention consiste à réaliser un dispositif d'adressage fiable des cartes d'un automate programmable, dans lequel l'adressage ne dépend que de l'emplacement des cartes sur le bus, même pour un nombre de cartes inférieur à celui des connecteurs.

Le dispositif de sécurité des échanges sur le bus selon l'invention est caractérisé en ce que :

le circuit imprimé du bus est du type à double face, et à conducteurs de liaison subdivisés en plusieurs faisceaux élémentaires affectés à un bus adresse, à un bus ordre, à un bus information, et à un bus compte-rendu,

le premier comparateur d'adresse de chaque carte est branché au bus adresse et au câblage de l'identificateur d'adresse, et coopère en cas de reconnaissance de l'adresse câblée et de l'adresse mise sur le bus avec un commutateur logique susceptible de commander l'émission simultanée de l'adresse câblée et du complément de cette adresse sur les brins du bus compte-rendu,

l'unité de commande UC comprend un deuxième comparateur connecté au registre adresse et aux brins du bus compte-rendu pour comparer l'adresse mise par le registre sur le bus adresse et les compte-rendus de l'adresse câblée et de son complément en provenance de la carte.

La coopération des moyens du dispositif de sécurité permet de s'assurer que la carte adressée existe bien, que c'est la bonne carte qui répond et qu'elle est la seule à répondre.

Selon une caractéristique de l'invention, chaque carte est équipée d'une porte logique connectée à la sortie du premier comparateur d'adresse et aux brins du bus ordre, la porte étant agencée pour valider l'opération en cas de reconnaissance de l'adresse et de compréhension de l'ordre, entraînant le déblocage du commutateur logique et le transfert des compte-rendus.

Selon une autre caractéristique de l'invention, l'unité de commande UC comporte un analyseur de défaut coopérant avec le bus compte-rendu et/ou le deuxième comparateur pour identifier la carte défectueuse en cas de compte-rendu incorrect.

Un exposé va suivre ci-après d'un mode de mise en œuvre de l'invention, à l'aide des dessins annexés, dans lesquels :

la figure 1   montre la structure électrique d'un automate programmable classique ;

la figure 2   illustre le bus de l'automate équipé du dispositif de sécurité selon l'invention ;

la figure 3   représente le schéma synoptique du dispositif d'adressage et de compte-rendus d'une carte associée à l'unité de commande ;

la figure 4   montre le schéma électrique détaillé de l'adressage de chaque carte.

la figure 5   est une vue partielle détaillée du bus de la figure 2.

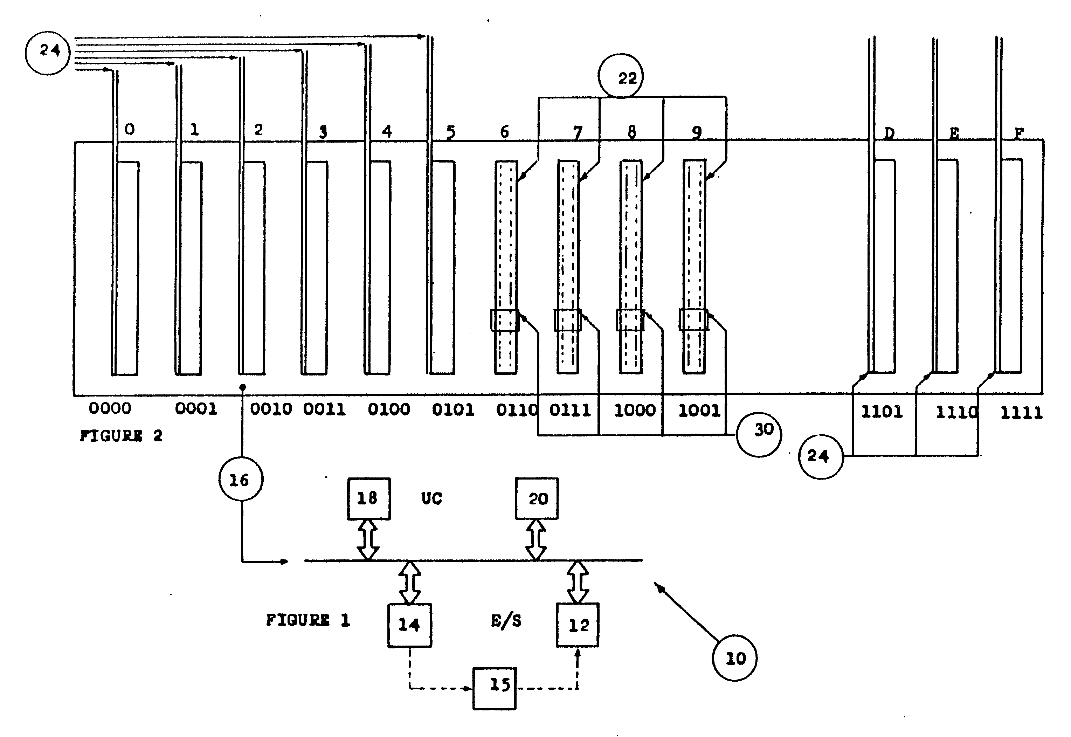

Sur la figure 1, la structure électrique d'un automate programmable 10 est dotée d'une pluralité de sous-ensembles comprenant une unité de commande UC, des modules d'entrée 12 et de sortie 14 raccordés au processus 15, et un bus 16 de liaison servant de support aux échanges d'informations entre les différents sous-ensembles. Les sous-ensembles sont formés par des cartes 24 électroniques indépendantes ayant chacune une fonction prédéterminée. L'unité de commande UC à logique programmable comporte un module unité de traitement 18 ou processeur qui pilote le fonctionnement de l'automate, et un module mémoire 20 pour le stockage du programme et des données. Les modules d'entrée 12 autorisent l'acquisition des données en provenance de capteurs du processus 15 ou de l'installation automatisée (contact fin de course, bouton poussoir, détecteurs de proximité, etc...). Les modules de sortie 14 transmettent les ordres élaborés par l'unité de commande UC à des actionneurs du processus 15 (commande de contacteurs ou disjoncteurs, de voyants, d'électrovannes, etc...).

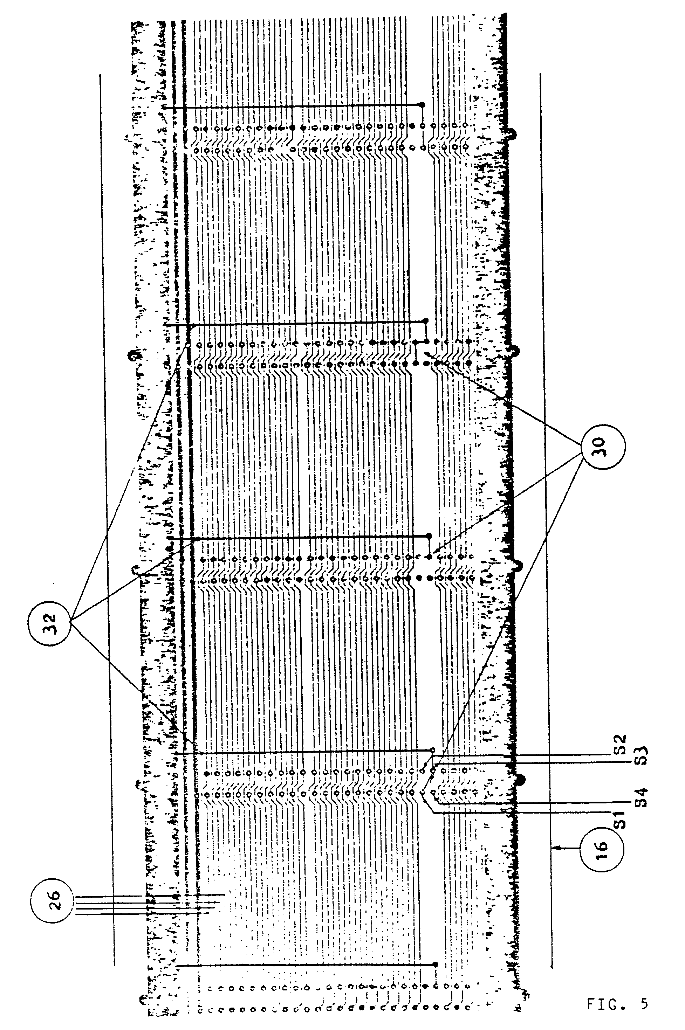

Le bus 16 est formé par un circuit imprimé (fig. 2 et 5) situé en fond de panier, et comprenant une pluralité de connecteurs 22 destinés à la réception des cartes 24 enfichables. Le circuit imprimé du bus 16 comporte n brins 26 parallèles de connexion, subdivisés en une pluralité de faisceaux élémentaires affectés au bus adresse BA, au bus ordre BO, au bus information BI, au bus compte-rendus CR et à l'alimentation. A titre d'exemple, l'automate programmable 10 comporte un bus 16 à soixante quatre brins 26 connectés d'une manière appropriée à seize connecteurs 22, mais il est évident que l'invention peut s'appliquer à un bus 16 ayant un nombre différent de brins 26 et de connecteurs 22. L'emplacement de chaque carte 24 correspondant à un module spécifique est numéroté sur le bus 16 par des repères 0, 1, 2 ... F (fig. 2).

Selon l'invention, l'adressage des seize cartes 24 s'effectue grâce à des identificateurs 30 de contrôle câblés sur le bus 16 au niveau des seize connecteurs 22. Chaque identificateur 30 d'adresse est formé par un câblage prédéterminé de quatre brins $S_1$, $S_2$, $S_3$, $S_4$ connectés sur le bus 16 à des plots du connecteur 22. Les quatre brins $S_1$ à $S_4$ sont portés à des niveaux logiques bas (absence de tension) ou haut (présence de tension) définis respectivement par les états « 0 » et « 1 », de manière à constituer sur le bus 16 une adresse de quatre bits, affectée à un emplacement prédéterminé de chaque carte 24. L'adresse câblée varie d'un emplacement à un autre, et se trouve en liaison avec la carte 24 correspondante par le connecteur 22 associé. Les seize adresses successives sont ainsi déterminées par des mots de quatre bits 0000, 0001, 0010 ... 1111, affectés respectivement aux emplacements 0, 1, 2 ... et F des cartes 24. A une adresse donnée d'un identificateur 30 correspond une carte 24 et une seule.

La figure 5 montre en détail le câblage de plusieurs identificateurs 30 d'adresse. Le bus 16 est à double face, et comprend un conducteur 32 associé à chaque identificateur 30 pour relier le bus alimentation à certains brins $S_1$, $S_2$, $S_3$, $S_4$ du câblage, de manière à définir le niveau logique 1 dans le mot de l'adresse. Chaque conducteur 32 est isolé des brins du bus 16, et s'étend perpendiculairement à la direction horizontale des brins.

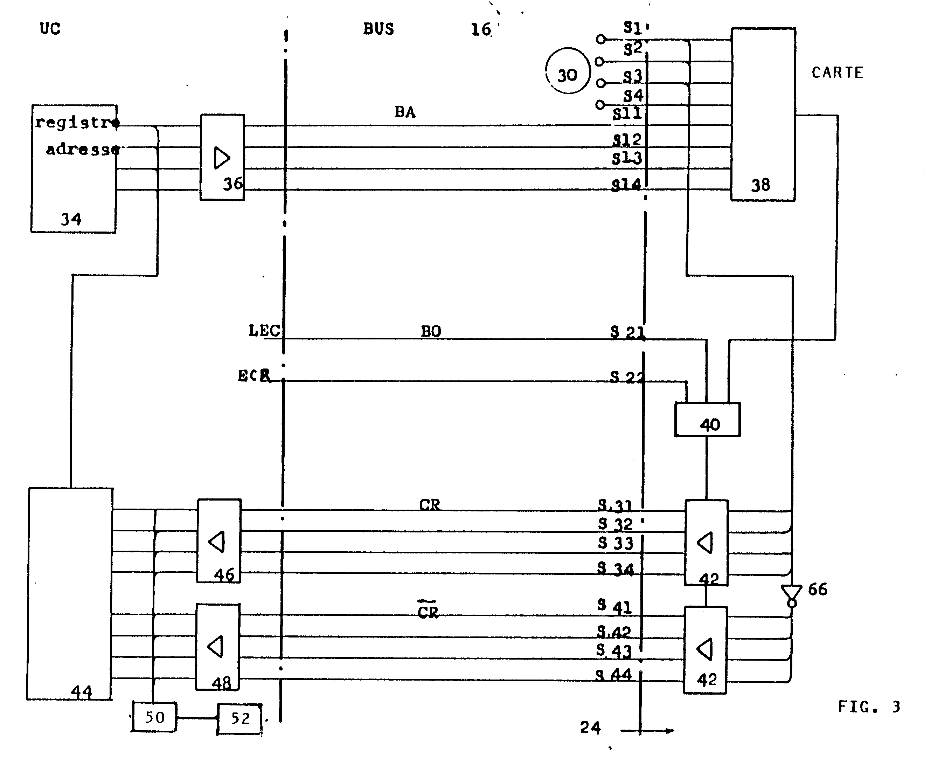

La figure 3 illustre le schéma synoptique de l'unité de commande UC associée au dispositif d'adressage et d'identification d'une carte 24. Le registre adresse 34 de l'unité de commande UC de l'automate 10 est branché par l'intermédiaire d'un amplificateur 36, à quatre brins ou voies de transmission $S_{11}$, $S_{12}$, $S_{13}$, $S_{14}$ du bus adresse BA. Chaque carte 24 comporte un comparateur 38 qui compare en permanence l'adresse câblée de l'identificateur 30 et l'adresse mise sur le bus adresse BA par l'unité de commande UC. La sortie du comparateur 38 d'adresses est relié à l'entrée d'une porte logique 40 connectée d'autre part à deux brins $S_{21}$ et $S_{22}$ du bus ordre BO pilotant respectivement les opérations de lecture (LEC) ou d'écriture (ECR). En cas de reconnaissance de l'adresse par le comparateur 38 et de validation de l'ordre LEC ou ECR transmis par le bus BO, la porte 40 délivre un signal de commande à un commutateur logique 42 pour autoriser l'émission à partir de la carte 24 de l'adresse câblée (quatre bits) de l'identificateur 30 sur les quatre brins $S_{31}$, $S_{32}$, $S_{33}$, $S_{34}$ du bus compte-rendu CR, et de l'adresse câblée complémentée (quatre bits) sur les quatre autres brins $S_{41}$, $S_{42}$, $S_{43}$, $S_{44}$ du bus compte rendu $\overline{CR}$. Ce système de compte-rendus a pour objet de s'assurer que la carte 24 adressée d'entrée ou de sortie existe bien, que c'est la bonne carte qui répond, et qu'elle est la seule à répondre. La carte 24 adressée renvoie à l'unité de commande UC son adresse câblée et son adresse complémentée grâce aux huit brins de transmission du bus compte-rendus CR et $\overline{CR}$. L'unité de commande UC comporte un comparateur 44 connecté d'une part aux huit brins du bus compte-rendus CR et $\overline{CR}$ par l'intermédiaire de portes 46, 48 d'adaptation, et d'autre part au registre adresse 34. Le contrôle d'adresse s'opère ainsi grâce au comparateur 44 de l'unité de commande UC qui compare son adresse propre émise sur le bus adresse BA, et les compte-rendus de l'adresse câblée en provenance de la carte 24.

Les sorties des portes d'adaptation 46, 48 du système de compte-rendus de l'unité de commande UC sont reliées à un analyseur de défaut 50 par l'intermédiaire d'un registre 52, de manière à identifier la carte 24 en panne lors d'un échange défectueux signalé par un compte-rendu incorrect.

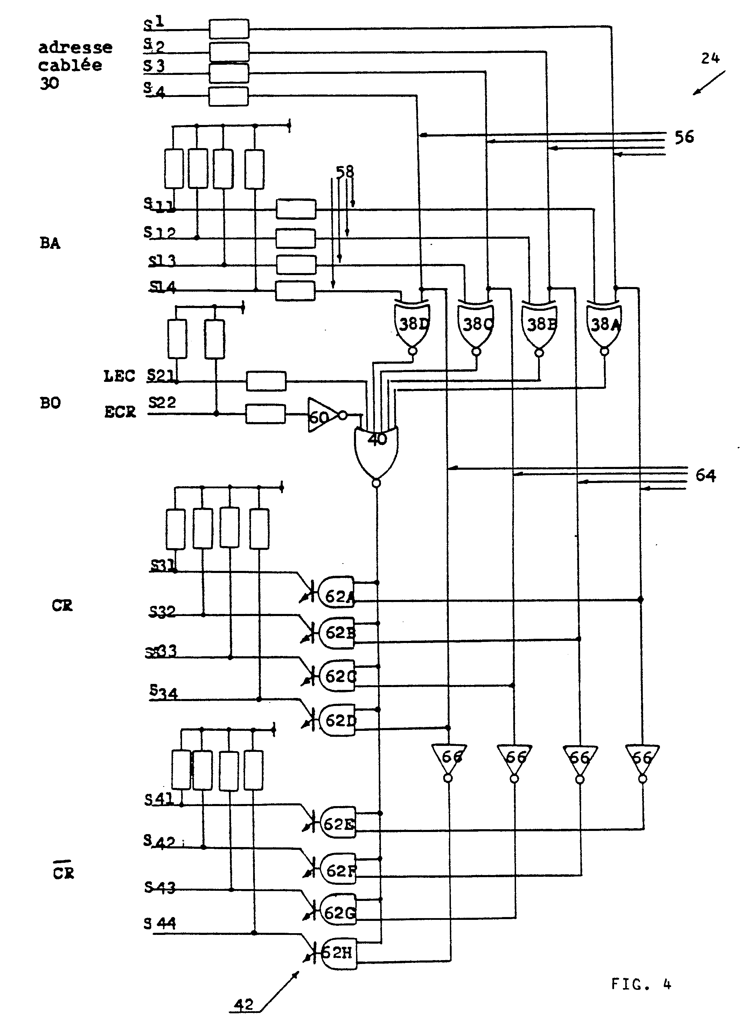

La figure 4 représente le schéma électrique détaillé du dispositif d'adressage de la carte 24. Les mêmes repères seront utilisés pour désigner des pièces identiques à celles décrites en référence à la figure 3. Le comparateur d'adresse 38 de chaque carte 24 est réalisé par quatre circuits logiques 38A, 38B, 38C, 38D OU exclusif dont la première série d'entrées sont connectées par des conducteurs 56 aux brins $S_1$, $S_2$, $S_3$, $S_4$, de l'identificateur 30 d'adresse câblée sur le bus 16 et dont la deuxième série d'entrées sont en liaison par des conducteurs 58 avec les voies de transmissions $S_{11}$, $S_{12}$, $S_{13}$, $S_{14}$ du bus adresse BA. La porte 40 comprend un circuit logique NOR à entrées branchées d'une part aux sorties correspondantes des circuits 38A, 38B, 38C, 38D du comparateur d'adresse 38, et d'autre part aux brins $S_{21}$ et $S_{22}$ du bus ordre BO, un inverseur 60 étant intercalé dans le conducteur de liaison au brin $S_{22}$ d'écriture (ECR). Le commutateur logique 42 est formé par huit circuits logiques NAND 62A, 62B, 62C, 62D ; 62E, 62F, 62G, 62H dont les sorties sont respectivement reliées aux brins $S_{31}$, $S_{32}$, $S_{33}$, $S_{34}$ ; $S_{41}$, $S_{42}$, $S_{43}$, $S_{44}$, du bus compte-rendus CR et $\overline{CR}$. La sortie de la porte 40 NOR est connectée à l'une des entrées de chaque circuit NAND 62A à 62H. L'autre entrée de chaque circuit 62A à 62D du bus compte-rendu CR est branchée par un conducteur 64 au brin correspondant $S_1$, $S_2$, $S_3$, $S_4$, de l'adresse câblée de l'identificateur 30, tandis que l'entrée de chacun des circuits 62E à 62H du bus compte-rendu $\overline{CR}$ est connecté au conducteur 64 correspondant par l'intermédiaire d'un inverseur 66.

Le fonctionnement du dispositif d'adressage et l'identification des cartes 24 de l'automate programmable 10 selon l'invention est le suivant :

A chaque opération de lecture ou d'écriture intervenant lors du déroulement d'un cycle, l'unité de commande UC adresse l'une des seize cartes 24 enfichées sur le bus 16. On supposera par la suite que la carte adressée 24 est une carte d'entrée ou de sortie. Le comparateur d'adresse 38 de la carte 24 adressée compare en permanence l'état de l'identificateur 30 de contrôle dont l'adresse câblée à quatre bits est l'image de l'emplacement de la carte 24 sur le bus 16, et l'adresse du registre 34 mise sur les quatre brins $S_{11}$, $S_{12}$, $S_{13}$, $S_{14}$ du bus BA par l'unité de commande UC. En cas d'égalité de ces deux adresses, la carte 24 se reconnaît. L'ordre de lecture ou d'écriture est codé sur l'un des brins $S_{21}$, $S_{22}$ du bus ordre BO. La porte 40 valide alors l'opération et provoque le déblocage du commutateur 42 logique. La carte 24 renvoie alors son adresse câblée et le complément de cette adresse au comparateur 44 de l'unité de commande UC par l'intermédiaire des voies de transmission $S_{31}$, $S_{32}$, $S_{33}$, $S_{34}$ du bus compte-rendu CR, et $S_{41}$, $S_{42}$, $S_{43}$, $S_{44}$ du bus compte-rendu $\overline{CR}$. Le comparateur 44 compare ensuite le compte-rendu reçu avec l'adresse carte émise par le registre 34. Trois possibilités sont à prendre en considération :

un compte-rendu correct, indique que la carte 24 adressée existe et que c'est la bonne et la seule à répondre ;

l'absence de compte-rendu signifie que la carte adressée ne répond pas (soit absente, soit en défaut) ;

un compte-rendu incorrect signale soit la défaillance locale de la carte adressée, soit une réponse simultanée d'une autre carte 24.

Une carte 24 défectueuse est identifiée automatiquement par l'analyseur 50 de l'unité de commande UC. Le contrôle des informations s'effectue d'une manière classique et permet de s'assurer que la bonne information a été transmise. Plusieurs lectures systématiques de l'information lue lors d'une lecture sont opérées jusqu'à l'obtention de deux informations identiques. Dans le cas d'une écriture, l'information écrite est relue.

**Revendications**

1. Dispositif de sécurité des échanges sur un bus (16) d'un automate programmable (10) comprenant une pluralité de cartes électroniques, notamment une unité de commande (UC), des mémoires et des modules d'entrée (12) et de sortie (14), le bus étant formé par un circuit imprimé situé en fond de panier et équipé de connecteurs (22) échelonnés à intervalles prédéterminés sur le bus pour la réception des cartes (24) enfichables, chaque carte comportant :

un identificateur (30) d'adresse comprenant un câblage de n brins (S1, S1, S3, S4) élémentaires portés à des niveaux logiques bas ou haut selon une combinaison prédéterminée, de manière à constituer une adresse câblée de n bits, qui varie d'un emplacement à un autre, ledit identificateur d'adresse étant solidaire du bus (16),

les brins (S1, S2, S3, S4) du câblage de chaque identificateur (30) d'adresse étant connectés à des plots prédéterminés du connecteur (22) correspondant,

et un premier comparateur (38) d'adresse destiné à comparer l'adresse effective de la carte (24) avec l'adresse mise sur le bus (16) par un registre d'adresse 34 de l'unité de commande (UC), caractérisé en ce que :

le circuit imprimé du bis (16) est du type à double face, et à conducteurs (26) de liaison subdivisés en plusieurs faisceaux élémentaires affectés à un bus adresse (BA), à un bus ordre (BO), à un bus information (BI), et à un bus compte-rendu (CR, $\overline{CR}$),

le premier comparateur (38) d'adresse de chaque carte (24) est branché au bus adresse (BA) et au câblage de l'identificateur (30) d'adresse, et coopère en cas de reconnaissance de l'adresse câblée et de l'adresse mise sur le bus (BA) avec un commutateur logique (42) susceptible de commander l'émission simultanée de l'adresse câblée et du complément de cette adresse sur les brins (S31, S32, S33, S34 ; S41, S42, S43, S44), du bus compte-rendu (CR, $\overline{CR}$),

l'unité de commande UC comprend un deuxième comparateur (44) connecté au registre adresse (34) et aux brins S31 à S44 du bus compte-rendu CR, $\overline{CR}$ pour comparer l'adresse mise par le registre (34) sur le bus adresse BA, et les compte-rendus de l'adresse câblée et de son complément en provenance de la carte (24).

2. Dispositif de sécurité des échanges sur le bus selon la revendication 1, caractérisé par le fait que chaque carte (24) est équipée d'une porte (40) logique connectée à la sortie du premier comparateur d'adresse (38) et aux brins S21, S22 du bus ordre BO, la porte (40) étant agencée pour valider l'opération en cas de reconnaissance de l'adresse et de compréhension de l'ordre, entraînant le déblocage du commutateur logique (42) et le transfert des compte-rendus.

3. Dispositif de sécurité des échanges sur le bus selon la revendication 1, caractérisé par le fait que l'unité de commande UC comporte un analyseur de défaut (50) coopérant avec le bus compte-rendu et/ou le deuxième comparateur (44) pour identifier la carte (24) défectueuse en cas de compte-rendu incorrect.

**Claims**

1. Device for safety of exchanges on a bus (16) of a programmable controller (10), comprising a plurality of electronic boards, particularly a control unit (UC), memories and output (12) and input (14) modules, the bus being made of a printed circuit, situated at the bottom of the basket and equipped with connectors (22), placed at predetermined intervals on the bus, for the reception of mounted boards (24), each board comprising :

an address identificator (30) comprising a wiring of elementary strands, (S1, S1, S3, S4) carried at low or high logical levels, according to a predetermined combination, so as to constitute a wired address of n bits, which varies from place to place, said address identificator being interdependent of the bus (16),

the strands (S1, S2, S3, S4) of the wiring of each address identificator (30) being connected to predetermined fixed contacts of the corresponding connector (22),

and a first address comparator (38), to compare the effective address (24) with the address, laid on the bus (16) by an address register (34) of the control unit (UC), characterized in that the printed circuit of the bus (16) is a doubled-face type, and has connection conductors (26) sub-divided into elementary beams, affected to an address bus (BA), to an order bus (BO), to an information bus (BI) and to a bus report (CR, $\overline{CR}$),

the first address comparator (38) of each board (24) is connected to the address bus (BA) and to the wiring of the address identificator (30) and cooperates, in case the wired address or the address laid on the bus (BA) with a logical commutator (42) is recognized and being able to control the simultaneous transmission of the wired address and the complement of this address on the strands (S31, S32, S33, S34 ; S41, S42, S43, S44), of the bus report (CR, $\overline{CR}$),

the control unit (UC) comprises a second comparator (44) connected to the adress register (34) and to the strands S31 to S44 of the bus report CR, CR to compare the address laid by the register (34) on the address bus (BA) and the reports of the wired address and its complement from the board (24).

2. Device for safety of exchanges on the bus, according to claim 1, characterized in that each board (24) is equipped with a logical door (40) connected to the input of the first address comparator (38) and to the strands S21, S22 of the order bus BO, the door (40) being designed to validate the operation, in case the address or the understanding of the order is recognized, which produces the unlocking of the logical switch (42) and the transfer of the reports.

3. Device for safety of exchanges on the bus, according to claim 1, characterized in that the control-unit UC comprises a fault analyzer (50) co-operating with the report bus and/or the second comparator (44) to identify the faulty board (24) in case of a wrong report.

**Patentansprüche**

1. Datenuebertragungssicherungs-Vorrichtung auf einem Bus (16) eines programmierbaren Automaten (10) mit einer Mehrzahl von elektronischen Karten, insbesondere eine Steuereinheit (UC), Speicher und Eingangsmodule (12) und Ausgangsmodule (14), wobei der Bus von einer gedruckten Schaltung gebildet wird, die am Boden des Korbes gelegen ist und die mit Steckverbindern (22) ausgeruestet ist, die in vorbestimmten Abstaenden auf dem Bus verteilt sind zum Empfang der einsteckbaren Karten (24), wobei jede Karte aufweist :

einen Adressen-Identifizierer (30) mit einer Verkabelung von n elementaren Draehten (S1, S2, S3, S4), die gemaess einer vorbestimmten Kombination auf ein niedriges oder hohes logisches Niveau gebracht werden, um eine verkabelte Adresse von n Bit zu bilden, die sich von einer Stelle zur anderen aendert, wobei der genannte Adressen-Identifizierer mit dem Bus (16) verbunden ist, und die Verkabelungsdraehte (S1, S2, S3, S4) jedes Adressen-Identifizierers (30) mit den vorbestimmten Kontakten des entsprechenden Steckverbinders (22) verbunden sind,

und einen ersten Adressenvergleicher (38), der dazu bestimmt ist, die effektive Adresse der Karte (24) mit der auf dem Bus (16) durch ein Adressenregister (34) der Steuereinheit (UC) angegebenen Adresse zu vergleichen, dadurch gekennzeichnet, dass :

die gedruckte Schaltung des Bus (16) von doppelseitigem Typ ist und Verbindungsleiter (26) besitzt, die in mehrere elementare Buendel unterteilt sind, die einem Adressenbus (BA), einem Steuerbus (BO), einem Auskunftsbus (BI) und einem Berichterstattungsbus (CR, $\overline{CR}$) zugeordnet sind,

der erste Adressenvergleicher (38) jeder Karte (24) mit dem Adressenbus (BA) und mit der Verkabelung des Adressen-Identifizierers (30) verbunden ist und bei Erkennen der gekabelten Adresse und der Adresse auf dem Bus (BA) mit einem logischen Schalter (42) zusammenarbeitet, der die gleichzeitige Aussendung der gekabelten Adresse und die Ergaenzung dieser Adresse auf den Draehten (S31, S32, S33, S34 ; S41, S42, S43, S44) des Berichterstattungsbus (CR, $\overline{CR}$) steuern kann,

die Steuereinheit (UC) einen zweiten Vergleicher (44) besitzt, der mit dem Adressenregister (34) und den Draehten (S31-S44) des Berichter-

stattungsbus (CR, $\overline{CR}$) verbunden ist, um die von dem Register (34) auf dem Adressenbus (BA) angegebene Adresse und die Berichterstattungen der gekabelten Adresse und der von der Karte (24) kommenden Ergaenzung zu vergleichen.

2. Datenuebertragungssicherheits-Vorrichtung auf dem Bus, gemaess Anspruch 1, dadurch gekennzeichnet, dass jede Karte (24) mit einem logischen Tor (40) ausgeruestet ist, das mit dem Ausgang des ersten Adressenvergleichers (38) und mit den Draehten (S21, S22) des Steuerbus (BO) verbunden ist, wobei das Tor (40) so ausgefuehrt ist, um bei Erkennen der Adresse und Verstehen des Befehls den Vorgang zu bestaetigen, was die Entriegelung des logischen Schalters (42) und die Uebermittlung der Berichterstattungen bewirkt.

3. Datenuebertragungssicherheits-Vorrichtung auf dem Bus, gemaess Anspruch 1, dadurch gekennzeichnet, dass die Steuereinheit (UC) einen Fehleranalysator (50) aufweist, der mit dem Berichterstattungsbus und/oder dem zweiten Vergleicher (44) zusammenarbeitet, um die fehlerhafte Karte (24) bei nicht korrekter Berichterstattung zu identifizieren.

0 086 137

24

22

| 0 | 1 | 2 | 3 | 4 | 5 | 6 | 7 | 8 | 9 | | D | E | F |

| 0000 | 0001 | 0010 | 0011 | 0100 | 0101 | 0110 | 0111 | 1000 | 1001 | | 1101 | 1110 | 1111 |

FIGURE 2

30

24

16

18  UC  20

FIGURE 1  E/S

14  12

15

10

FIG. 3

FIG. 4

FIG. 5